# EUROPÄISCHE PATENTSCHRIFT

(11) **EP 3 907 257 B1**
(45) Veröffentlichungstag und Bekanntmachung des Hinweises auf die Patenterteilung: **02.09.2026**
(21) Anmeldenummer: 20172894.6
(22) Anmeldetag: 05.05.2020
(51) Int. Cl.: C08L 9/06, C08C 19/22, C08C 19/25, C08L 7/00

(54) **SCHWEFELVERNETZBARE GUMMIERUNGSMISCHUNG**
SULPHUR LINKABLE RUBBER COATING MIXTURE
MÉLANGE D'ENGOMMAGE RÉTICULABLE AU SOUFRE

(43) Veröffentlichungstag der Anmeldung: 10.11.2021
(73) Patentinhaber: Continental Reifen Deutschland GmbH, 30175 Hannover (DE)
(72) Erfinder: EICHHORST, Christoph, 30419 Hannover (DE); PUPPA, Marion, 30419 Hannover (DE); KRAMER, Thomas, 30419 Hannover (DE); RECKER, Carla, 30419 Hannover (DE); BERNECKER, Anja, 30419 Hannover (DE); IQBAL, Syed Imran Hussain Syed Javaid, 30419 Hannover (DE)
(74) Vertreter: Continental Corporation

(56) Entgegenhaltungen:
- EP-A1- 2 674 452
- EP-A1- 3 150 401
- EP-A1- 3 150 402
- EP-A1- 3 258 008
- DE-A1- 102013 105 193
- DE-A1- 102015 210 422
- DE-A1- 102015 218 746
- DE-A1- 102018 212 821
- US-A1- 2010 036 019
- US-A1- 2011 172 344
- US-A1- 2014 228 495
- US-A1- 2018 016 425

## Beschreibung

Die Erfindung betrifft einen Fahrzeugluftreifen, der eine mit Schwefel vernetzte Gummierungsmischung für textile Festigkeitsträger, enthaltend 5 bis 80 phr zumindest eines Polyisoprens, 20 bis 95 phr zumindest eines lösungspolymerisierten, funktionalisierten Dienelastomers aus zumindest einem konjugierten Dien und gegebenenfalls einer oder mehrerer vinylaromatischer Verbindungen mit einem Gehalt an vinylaromatischer Verbindung von 0 bis 50 Gew.-%, 10 bis 90 phr zumindest eines Füllstoffes und ein Haftsystem für die Gummi-Textilhaftung aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Häufig basieren schwefelvernetzbare Gummierungsmischungen für textile Festigkeitsträger auf einem Polymerverschnitt aus Naturkautschuk und Polybutadien. In schwefelvernetzbaren Kautschukmischungen, die als Gummierungsmischungen für textile Festigkeitsträger wie Rayon, Polyamid und Polyester verwendet werden, werden üblicherweise Haftsysteme wie z. B. so genannte Methylenakzeptor-Methylendonor-Paare eingesetzt, um zusätzlich zur Anbindung über das Schwefelnetzwerk eine Verbindung zur Haftimprägnierung des textilen Festigkeitsträgers, in der Regel ein RFL-Dip, zu erzielen. Der RFL-Dip beinhaltet Resorcin und Formaldehyd oder deren Vorkondensate.

Bei Reifen weisen Mischungen für die Gummierung textiler Festigkeitsträger in der Regel Ruß als preiswerten Füllstoff auf. Die Gummierungsmischungen müssen dabei eine ausreichende und haltbare Haftung zu den textilen Festigkeitsträgern gewährleisten, wobei die Haftung auch hohen dynamischen und thermischen Belastungen standhalten muss.

In den letzten Jahren gewinnt die Reduzierung des Rollwiderstandes von Reifen zunehmend an Bedeutung. Dabei ist es bekannt, den Reifen mit hysteresearmen und damit rollwiderstandsarmen Mischungen im Laufstreifen zu versehen. Zu den Maßnahmen, die zur Verringerung des Rollwiderstandes einer Kautschukmischung eingesetzt werden, gehört z. B. der Einsatz von Kieselsäure anstelle von Ruß als Füllstoff.

So offenbaren die EP 3 150 401 A1, die EP 3 150 402 A1, die DE 10 2015 218746 A1, die DE 10 2013105193 A1, die US 2010/036019 A1 und die DE 10 2015 210422 A1 Kautschukmischungen für Laufstreifen von Fahrzeugreifen, die spezielle Eigenschaften wie niedrigen Rollwiderstand und/oder niedrigen Abrieb und/oder guten Nassgriff aufweisen sollen.In der DE 696 02 212 T2 hat man zur Reduzierung des Rollwiderstandes von Fahrzeugreifen vorgeschlagen, für die Gummierung der metallischen Festigkeitsträger des Gürtels eine Mischung einzusetzen, die Naturkautschuk und eine Kieselsäure mit einer spezifischen CTAB-Oberfläche von weniger als 125 m²/g enthält. Neben einer Reduzierung des Rollwiderstandes zeigt die Mischung auch eine verringerte Mooney-Viskosität im Vergleich zu Mischungen mit einer Kieselsäure mit einer größeren spezifischen Oberfläche.

In der DE 10 2011 053 450 A1 wird eine Kautschukmischung für die Gummierung von Festigkeitsträgern im Reifen, insbesondere metallischen Festigkeitsträgern, vorgeschlagen, die Naturkautschuk, Polybutadien und 55 phr der Kieselsäure Zeosil^{®} 1115 MP mit einer CTAB-Oberfläche von 105 m²/g enthält. Die Mischung weist eine verbesserte Beständigkeit gegen Rissbildung auf.

Die WO 2016198177 A1 beschreibt eine Kautschukmischung für Reifenlaufstreifen, die Naturkautschuk, bis zu 80 phr eines funktionalisierten Styrol-Butadien-Copolymers, bis zu 40 phr Kieselsäure und ein Silankupplungsagens enthält. Im Zusammenspiel mit anderen Mischungen im Reifen, soll sich der Reifen durch einen niedrigen Rollwiderstand auszeichnen. Das funktionalisierte Styrol-Butadien-Copolymer besitzt eine Glasübergangstemperatur T_{g} von weniger als -40 °C.

Die US 20100032071 A1 offenbart eine Kautschukmischung für die Gummierung der Karkasse eines Reifens, die Naturkautschuk, bis zu 30 phr eines funktionalisierten Styrol-Butadien-Copolymers, bis zu 40 phr Kieselsäure und ein Silankupplungsagens enthält. Im Zusammenspiel mit anderen Mischungen im Reifen, soll sich der Reifen durch einen niedrigen Rollwiderstand bei hoher Reifenfestigkeit auszeichnen. Das funktionalisierte Styrol-Butadien-Copolymer weist üblicherweise eine Funktionalisierung an einem Kettenende sowie eine Glasübergangstemperatur T_{g} von weniger als -40 °C auf.

In der US 2008009570 A1 werden Kautschukmischungen beschrieben, die Naturkautschuk, bis zu 40 phr eines modifizierten Styrol-Butadien-Copolymers, bis zu 46 phr Kieselsäure und ein Haftsystem enthalten. Reifen mit diesen Mischungen sollen sich durch verbesserte Eigenschaften, beispielsweise im Hinblick auf Treibstoffverbrauch und die Haltbarkeit, auszeichnen. Das funktionalisierte Styrol-Butadien-Copolymer weist üblicherweise eine Funktionalisierung an einem Kettenende sowie eine Glasübergangstemperatur T_{g} von weniger als -40 °C auf.

Weitere Gummierungsmischungen werden in der US 2014/228495 A1, der US 2018/016425 A1, der EP 2 674 452 A1, der EP 3 258 008 A1 und der DE 10 2018 212821 A1 beschrieben.

Ferner offenbart die US 2011/0172344 A1 modifizierte Dienpolymere für Kautschukmischungen.

Der Erfindung liegt die Aufgabe zugrunde, eine Kautschukmischung für die Gummierung von textilen Festigkeitsträgern in Fahrzeugluftreifen bereitzustellen, die sich durch einen reduzierten Verlustfaktor tan δ bei 55 °C und damit durch einen verbesserten Rollwiderstand bei Verwendung im Reifen auszeichnet.

Gelöst wird die Aufgabe erfindungsgemäß dadurch, dass das lösungspolymerisierte, funktionalisierte Dienelastomer an einem Kettenende mit einer aminogruppen- und/oder ammoniumgruppen-enthaltenden Organosilylgruppe funktionalisiert ist und am anderen Kettenende mit einer Aminogruppe funktionalisiert ist.

Die Verwendung eines Dienelastomers mit den genannten Funktionalisierungen bewirkt eine Verbesserung der Polymer-Füllstoff- Wechselwirkung und damit eine Erniedrigung des Verlustfaktors tan δ bei 55 ° C. Dies ist in Indikator für einen niedrigen Rollwiderstand eines Fahrzeugluftreifens, der eine Gummierung aus dieser Mischung aufweist.

Funktionalisierungen mit einer aminogruppen- und/oder ammoniumgruppen-enthaltenden Organosilylgruppe können erhalten werden, indem man das Polymer mit einer aminogruppen-enthaltenden Alkoxysilylverbindung mit Schutzgruppen an der Aminogruppe reagieren lässt. Beispielsweise kann N,N-Bis(trimethylsily)aminopropylmethyldiethoxysilan eingesetzt werden. Weitere mögliche Substanzen für eine derartige Funktionalisierung sind in der EP 2 703 416 A1 beschrieben. Nach Entschützung erhält man das funktionalisierte Dienelastomer.

Bei den Funktionalisierungen am anderen Kettenende kann es sich um primäre, sekundäre oder tertiäre Aminogruppen handeln, die auch ringförmig vorliegen können. Die Funktionalisierung kann erreicht werden, indem bei der Polymerisation Lithiumamide, wie in der EP 2 703 416 A1 beschrieben, zugegeben werden oder die Amide in situ durch Zugabe von n-Butyllithium und Aminen, z. B. ringförmigen Aminen wie Piperidin oder Piperazine, bei der Polymerisation erzeugt werden.

Vorzugsweise handelt es sich bei der Aminogruppe am anderen Kettenende um eine ringförmige Amingruppe und/oder Diamingruppe. Für Letzteres kann beispielsweise N-(t-Butyldimethylsilyl)piperazin in Kombination mit n-Butyllithium bei der Polymerisation zugegeben werden.

Vorzugsweise besitzt dieses funktionalisierte Dienelastomer zudem eine Glasübergangstemperatur T_{g} gemäß DSC von weniger als -40 °C.

Die Bestimmung der Glasübergangstemperatur (T_{g}) der Polymere erfolgt anhand von Dynamischer Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Durch die Verwendung eines funktionalisierten Dienelastomers mit einer Glasübergangstemperatur T_{g} von weniger als -40 °C in der eingangs genannten Gummierungsmischung kann eine weitere Erniedrigung des Verlustfaktors tan δ bei 55 ° C erreicht werden.

Die Gummierungsmischung enthält 5 bis 80 phr, zumindest eines Polyisoprens. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden (synthetisches Polyisopren, IR). Zum anderen handelt es sich bei Naturkautschuk (NR) um ein solches cis-1,4 Polyisopren, der cis-1,4-Anteil im Naturkautschuk ist größer 99 Gew.-%. Unter Naturkautschuk wird Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann.

Es können auch unterschiedliche Polyisoprene im Verschnitt eingesetzt werden. Vorzugsweise wird als Polyisopren Naturkautschuk eingesetzt, mit welchem die besten Ergebnisse hinsichtlich der Haftung erzielt werden.

Die Gummierungsmischung enthält 20 bis 95 phr zumindest eines lösungspolymerisierten, funktionalisierten Dienelastomers aus zumindest einem konjugierten Dien und gegebenenfalls einer oder mehrerer vinylaromatischer Verbindungen mit einem Gehalt an vinylaromatischer Verbindung von 0 bis 50 Gew.-%. Es können auch mehrere lösungspolymerisierte, funktionalisierte Dienelastomere eingesetzt werden.

Die Bestimmung des Vinylaromaten-Gehaltes erfolgt mittels ¹³C-NMR (Lösungsmittel: Deuterochloroform CDCl₃; NMR: engl. "nuclear magnetic resonance") und Abgleich mit Daten aus der Infrarot-Spektrometrie (IR; FT-IR Spektrometer der Firma Nicolet, KBr-Fenster 25 mm Durchmesser x 5 mm, 80 mg Probe in 5 mL 1,2-Dichlorbenzol).

Bei dem lösungspolymerisierten, funktionalisierten Dienelastomer aus zumindest einem konjugierten Dien und gegebenenfalls einer oder mehrerer vinylaromatischer Verbindungen kann es sich um unterschiedlichste Dienelastomere auf der Basis von z. B. Butadien, Isopren und Styrol handeln.

Vorzugsweise weist das lösungspolymerisierte, funktionalisierte Dienelastomer einen Gehalt an vinylaromatischer Verbindung von 0 bis 40 Gew.-% auf.

Gemäß einer vorteilhaften Weiterbildung der Erfindung ist das lösungspolymerisierte, funktionalisierte Dienelastomer ein Styrol-Butadien-Copolymer (SSBR).

Gemäß einer weiteren vorteilhaften Weiterbildung der Erfindung ist das lösungspolymerisierte, funktionalisierte Dienelastomer ein Polybutadien (BR).

Um den Rollwiderstand bei Verwendung im Reifen weiter zu verbessern, hat es sich als positiv erwiesen, wenn die Gummierungsmischung zwei lösungspolymerisierte, funktionalisierte Dienelastomere enthält, wobei ein Dienelastomer ein Styrol-Butadien-Copolymer und das andere Dienelastomer ein Polybutadien ist.

Bei dieser Ausführungsform ist es von Vorteil, wenn die Gummierungsmischung Styrol-Butadien-Copolymer und Polybutadien im Verhältnis von 1:2 bis 2:1 enthält.

Neben den genannten Kautschuken, kann die Gummierungsmischung auch andere in der Kautschukindustrie übliche Kautschuke, wie beispielsweise nicht funktionalisierte Polybutadiene, nicht funktionalisierte Styrol-Butadien-Copolymere, Styrol-Isopren-Butadien-Terpolymere, Butylkautschuk, Halobutylkautschuk oder Ethylen-Propylen-Dien-Kautschuk (EPDM), enthalten.

Die Gummierungsmischung enthält 10 bis 90 phr zumindest eines Füllstoffes.

Bei dem Füllstoff kann es sich um zumindest eine Kieselsäure handeln.

Es können unterschiedlichste Kieselsäuren, auch im Gemisch, zum Einsatz kommen. Bevorzugt ist es, wenn eine fein verteilte, gefällte Kieselsäure verwendet wird, die eine CTAB-Zahl (gemäß ASTM D 3765) von 30 bis 350 m²/g aufweist. Als Kieselsäuren können sowohl konventionelle Kieselsäuren wie die des Typs VN3 (Handelsname) der Firma Evonik als auch bevorzugt hochdispergierbare Kieselsäuren, so genannte HD-Kieselsäuren (z. B. Ultrasil 7000 der Firma Evonik), zum Einsatz kommen.

Um die Eigenschaften im Hinblick auf den Rollwiderstand bei Verwendung im Reifen weiter zu verbessern, hat es sich als vorteilhaft erwiesen, wenn zumindest eine Kieselsäure verwendet wird, deren CTAB-Zahl (gemäß ASTM D 3765) von weniger als 180 m²/g, vorzugsweise weniger als 100 m²/g, beträgt.

Alternativ oder zusätzlich kann die Gummierungsmischung auch 10 bis 90 phr zumindest eines Rußes als Füllstoff enthalten. Vorzugweise weist der Ruß eine Iodadsorptions-Zahl gemäß ASTM D 1510 von weniger 100 mg/g, vorzugsweise weniger als 50 mg/g, auf.

Vorteilhaft ist die gleichzeitige Verwendung von Ruß und Kieselsäure in der Gummierungsmischung.

Neben Kieselsäure und Ruß kann die Gummierungsmischung auch andere Füllstoffe, wie Alumosilicate, Kaolin, Kreide, Stärke, Magnesiumoxid, Titandioxid, Kautschukgele, Fasern, Kohlenstoffnanoröhrchen, Graphit, Graphene und sogenannte "carbon-silica dual-phase filler" enthalten.

Die Gummierungsmischung enthält ein Haftsystem für die Gummi-Textilhaftung in üblichen Mengen von 1 bis 10 phr. Das Haftsystem ist vorzugsweise ein Methylenakzeptor-Methylendonor-Paar. Bei dem Methylendonor kann es sich z.B. Hexamethoxymethylmelamin (HMMM) oder Hexamethylentetramin (HMT) handeln. Der Methylenakzeptor kann z. B. Resorcin, Phenol, ein Resorcin-, ein Phenol-, ein Acetonderivat oder ein Novolak-Harz sein. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus, welches mit dem RFL-Dip des textilen Festigkeitsträgers in haftende Wechselwirkung tritt.

Zur Verbesserung der Verarbeitbarkeit und zur Anbindung von Kieselsäure oder anderer polarer Füllstoff an den Kautschuk können der Gummierungsmischung Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die erfindungsgemäße Kautschukmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Kautschukmischung zugesetzt. Um die Haftung insbesondere zu textilen Festigkeitsträgern zu verbessern, enthält die Gummierungsmischung vorzugsweise weniger als 5 phr Schwefel.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Benzothiazyl-2-tert.-butylsulfenamid (TBBS) und Benzothiazyl-2-dicyclohexylsulfenamid (DCBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Auch weitere netzwerkbildende Systeme, wie z. B. Vulcuren^{®}, Duralink^{®}, Perkalink^{®} oder Systeme, wie sie in der WO 2010/049261 A2 beschrieben sind, können in der Gummierungsmischung eingesetzt werden.

Die Vulkanisationsbeschleuniger können in üblichen Mengen eingesetzt werden.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung wird in Fahrzeugluftreifen eingesetzt. Die textilen Festigkeitsträger können z. B. aus Aramid, Polyester, Polyamid, Rayon oder Hybridcorden aus diesen Materialien bestehen.

Die Gummierungsmischung kann zur Gummierung unterschiedlichster Reifenbauteile, wie dem Wulstkern, den Wulstabdeckungen, den Wulstverstärkern, dem Gürtel, der Karkasse oder den Gürtelbandagen, eingesetzt werden, aber auch für andere festigkeitsträgernahe Mischungen wie Kernreiter, Squeegee, Gürtelkantenpolster, Schulterpolster, Laufstreifenunterplatten oder andere Bodymischungen kann die Kautschukmischung verwendet werden, wobei auch mehrere Bauteile innerhalb eines Reifens mit der erfindungsgemäßen Mischung versehen werden können. Die Herstellung der erfindungsgemäßen Fahrzeugluftreifen erfolgt dabei nach dem Fachmann bekannten Verfahren.

Vorzugsweise wird die Gummierungsmischung als Karkassgummierung eingesetzt, wo die gute Ermüdungsbeständigkeit zu einer hohen Lebensdauer eines Fahrzeugluftreifens mit niedrigem Rollwiderstand führen.

Alternativ oder zusätzlich kann die Gummierungsmischung auch als Bandagengummierungsmischung eingesetzt werden, was wiederum die Lebensdauer des Fahrzeugluftreifens positiv beeinflusst.

Die Erfindung soll nun anhand der nachstehenden Tabellen näher erläutert werden.

In Tabelle 1 sind Mischungen für die Gummierung textiler Festigkeitsträger in Fahrzeugluftreifen dargestellt, die nur Kieselsäure als Füllstoff enthalten. In den Tabelle 2 und 3 sind Mischungen für die Gummierung von textilen Festigkeitsträgern in Fahrzeugluftreifen dargestellt, die zumindest Ruß als Füllstoff enthalten.

Bei den Mischungen der Tabellen wurden die Polymere und Füllstoffe hinsichtlich Menge und Art variiert. Die Vergleichsmischungen sind mit V, die erfindungsgemäßen Mischungen sind mit E gekennzeichnet.

Die Mischungsherstellung erfolgte unter üblichen Bedingungen unter Herstellung einer Grundmischung und anschließend der Fertigmischung in einem Labortangentialmischer.

Aus den Mischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN ISO 7619-1
- Rückprallelastizität bei 70 °C gemäß DIN 53 512
- Maximaler Verlustfaktor tan δₘₐₓ aus dynamisch-mechanischer Messung bei 55 °C gemäß DIN 53 513, Dehnungsdurchlauf (engl. "strain sweep")

Mit den Mischungen wurden ferner Haftversuche, so genannte Peel-Tests, gemäß ISO 36:2011 (E) sowie DIN 53 530 mit Auswertung gemäß DIN ISO 6133 an textilen Festigkeitsträgern aus Polyester ohne Alterung vorgenommen. Dazu wurden mit RFL-Dip ausgerüstete Festigkeitsträgercorde aus Polyester (1440x2 dtex) mit den unvulkanisierten Kautschukmischungen bedeckt und anschließend 20 min bei 160 °C vulkanisiert. Anschließend wurde die Kraft zum Abschälen der Mischung von den Corden (Haftkraft) bestimmt und die Bedeckung der Corde mit Mischung nach dem Abziehen optisch ermittelt (5: vollständige Bedeckung, 1: keine Bedeckung). Bei der Haftkraft wurden die Werte der Mischungen der ersten Mischungsspalte als 100 % gesetzt; die Werte der anderen Mischungen wurden auf die jeweilige Mischung bezogen.

**Tabelle 1**

| **Bestandteile** | **Einheit** | **1(V)** | **2(E)** | **3(V)** | **4(E)** | **5(E)** | **6(E)** | **7(E)** |
|---|---|---|---|---|---|---|---|---|
| Naturkautschuk | phr | 50 | 50 | 50 | 50 | 50 | 50 | 50 |
| SSBR 1^{a)} | phr | 50 | - | - | - | - | - | - |
| SSBR 2^{b)} | phr | - | 50 | - | - | - | - | - |
| SSBR 3^{c)} | phr | - | - | 50 | - | - | - | - |
| SSBR 4^{d)} | | - | - | - | 50 | - | - | - |
| SSBR 5^{e)} | phr | - | - | - | - | 50 | - | 25 |
| BR^{f)} | phr | - | - | - | - | - | 50 | 25 |
| Kieselsäure A^{g)} | phr | 65 | 65 | 65 | 65 | 65 | 65 | 65 |
| Weichmacher, Alterungsschutzmittel | phr | 17 | 17 | 17 | 17 | 17 | 17 | 17 |
| Vulkanisationsaktivatoren | phr | 4 | 4 | 4 | 4 | 4 | 4 | 4 |
| Silankupplungsagens | phr | 2,5 | 2,5 | 2,5 | 2,5 | 2,5 | 2,5 | 2,5 |
| Methylenakzeptor^{h)} | phr | 1,6 | 1,6 | 1,6 | 1,6 | 1,6 | 1,6 | 1,6 |
| Methylendonorⁱ⁾ | phr | 2 | 2 | 2 | 2 | 2 | 2 | 2 |
| Beschleuniger | phr | 1,9 | 1,9 | 1,9 | 1,9 | 1,9 | 1,9 | 1,9 |
| Schwefel | phr | 2,5 | 2,5 | 2,5 | 2,5 | 2,5 | 2,5 | 2,5 |

| **Eigenschaften** | | | | | | | | |
|---|---|---|---|---|---|---|---|---|
| Härte bei RT | ShoreA | 53 | 54 | 55 | 53 | 54 | 55 | 54 |
| Rückprallelast. bei 70 °C | % | 67 | 67 | 67 | 69 | 69 | 70 | 70 |
| tan δₘₐₓ bei 55 °C | - | 0,092 | 0,089 | 0,094 | 0,081 | 0,083 | 0,078 | 0,077 |
| Haftkraft (ungealtert) | % | 100 | 98 | 103 | 112 | 103 | 95 | 97 |
| Bedeckung (ungealtert) | - | 3,8 | 4,2 | 3,8 | 4,2 | 4,5 | 4,5 | 4,2 |

| | | | | | | | | |
|---|---|---|---|---|---|---|---|---|
| ^{a)} SSBR 1, lösungspolymerisiertes, einfach funktionalisiertes Styrol-Butadien-Copolymer, Styrol-Gehalt: 20 Gew.-%, Vinyl-Gehalt: 54 Gew.-%, Tg = -34 °C, an einem Ende funktionalisiert mit einer ammoniumgruppen-enthaltenden Organosilylgruppe ^{b)} SSBR 2, lösungspolymerisiertes, zweifach funktionalisiertes Styrol-Butadien-Copolymer, Styrol-Gehalt: 28 Gew.-%, Vinyl-Gehalt: 57 Gew.-%, Tg = -23 °C, an einem Ende funktionalisiert mit einer ammoniumgruppen-enthaltenden Organosilylgruppe, am anderen Ende funktionalisiert mit einer Piperazin-Gruppe (Funktionalisierung gemäß: EP 2 703 416 A1). ^{c)} SSBR 3, lösungspolymerisiertes, einfach funktionalisiertes Styrol-Butadien-Copolymer, Styrol-Gehalt: 16 Gew.-%, Vinyl-Gehalt: 35 Gew.-%, Tg = -59 °C, funktionalisiert mit einer Silansulfidgruppe ^{d)} SSBR 4, lösungspolymerisiertes, zweifach funktionalisiertes Styrol-Butadien-Copolymer, Styrol-Gehalt: 10 Gew.-%, Vinyl-Gehalt: 40 Gew.-%, Tg = -60 °C, an einem Ende funktionalisiert mit einer ammoniumgruppen-enthaltenden Organosilylgruppe, am anderen Ende funktionalisiert mit einer Piperidin-Gruppe (Funktionalisierung gemäß: EP 2 703 416 A1). ^{e)} SSBR 5, lösungspolymerisiertes, zweifach funktionalisiertes Styrol-Butadien-Copolymer, Styrol-Gehalt: 9 Gew.-%, Vinyl-Gehalt: 40 Gew.-%, Tg = -58 °C, an einem Ende funktionalisiert mit einer ammoniumgruppen-enthaltenden Organosilylgruppe, am anderen Ende funktionalisiert mit einer Piperazin-Gruppe (Funktionalisierung gemäß: EP 2 703 416 A1). ^{f)} BR, lösungspolymerisiertes, zweifach funktionalisiertes Polybutadien, cis-Gehalt: 30 Gew.-%, trans-Gehalt: 40 Gew.-%, Vinyl-Gehalt. 31 Gew.-%, Tg = -75 °C, an einem Ende funktionalisiert mit einer ammoniumgruppen-enthaltenden Organosilylgruppe, am anderen Ende funktionalisiert mit einer Piperazin-Gruppe (Funktionalisierung gemäß: EP 2 703 416 A1). ^{g)} Zeosil^{®} 1085 MP, CTAB-Zahl = 80 m²/g, BET 90 m²/g, Fa. Solvay ^{h)} butylcarbamat-funktionalisiertes Phenol-Formaldehydharz ⁱ⁾ Hexamethoxymethylmelamin 65 %ig auf Kieselsäure | | | | | | | | |

Bei den erfindungsgemäßen Gummierungsmischungen der Tabelle 1, die ein Dienelastomer mit Funktionalisierungen an beiden Kettenenden enthalten, ist eine deutliche Reduzierung des Verlustfaktors tan δₘₐₓ bei 55 °C zu verzeichnen. Dies geht einher mit einer Verringerung des Rollwiderstandes bei Verwendung der Mischung in Fahrzeugluftreifen.

Eine weitere Reduzierung des Verlustfaktors tan δₘₐₓ bei 55 °C kann erzielt werden, wenn das Dienelastomer eine Glasübergangstemperatur T_{g} gemäß DSC von weniger als -40 °C besitzt (s. 4(E), 5(E), 6(E)).

Eine besonders starke Reduzierung des Verlustfaktors tan δₘₐₓ bei 55 °C kann erzielt werden, wenn das lösungspolymerisierte, funktionalisierte Dienelastomer ein Polybutadien ist (s. 6(E)) und wenn dieses in Kombination mit einem lösungspolymerisierten, funktionalisierten Styrol-Butadien-Copolymer (s. (7(E)) eingesetzt wird.

Zudem zeigt sich bei allen erfindungsgemäßen Gummierungsmischungen der Tabelle 1, dass sowohl Haftkraft als auch Bedeckung auf einem hohen Niveau bleiben. Diese dienen als Indikator für eine stabile Haftung zwischen Gummierungsmischung und Textilkord.

**Tabelle 2**

| **Bestandteile** | **Einheit** | **8(V)** | **9(E)** | **10(V)** | **11(E)** | **12(E)** | **13(E)** | **14(E)** | **15(E)** | **16(E)** |
|---|---|---|---|---|---|---|---|---|---|---|
| Naturkautschuk | phr | 50 | 50 | 50 | 50 | 50 | 50 | 75 | 75 | 50 |
| SSBR 1^{a)} | phr | 50 | - | - | - | - | - | - | - | - |
| SSBR 2^{b)} | phr | - | 50 | - | - | - | - | - | - | - |
| SSBR 3^{c)} | phr | - | - | 50 | - | - | - | - | - | - |
| SSBR 4^{d)} | phr | | | - | 50 | | | | | |
| SSBR 5^{e)} | phr | - | - | - | - | 50 | - | 25 | - | 25 |
| BR^{f) BR511} | phr | - | - | - | - | - | 50 | - | 25 | 25 |
| Ruß N660 | phr | 65 | 65 | 65 | 65 | 65 | 65 | 65 | 65 | 65 |
| Weichmacher, Alterungsschutzm. | phr | 17 | 17 | 17 | 17 | 17 | 17 | 17 | 17 | 17 |
| Vulkanisationsaktivatoren | phr | 4 | 4 | 4 | 4 | 4 | 4 | 4 | 4 | 4 |
| Methylenakzeptor^{g)} | phr | 1,6 | 1,6 | 1,6 | 1,6 | 1,6 | 1,6 | 1,6 | 1,6 | 1,6 |
| Methylendonor^{h)} | phr | 2 | 2 | 2 | 2 | 2 | 2 | 2 | 2 | 2 |
| Beschleuniger | phr | 1 | 1 | 1 | 1 | 1 | 1 | 1 | 1 | 1 |
| Schwefel | phr | 2,5 | 2,5 | 2,5 | 2,5 | 2,5 | 2,5 | 2,5 | 2,5 | 2,5 |

| **Eigenschaften** | | | | | | | | | | |
|---|---|---|---|---|---|---|---|---|---|---|
| Härte bei RT | ShoreA | 56 | 57 | 57 | 56 | 56 | 56 | 56 | 55 | 56 |
| Rückprall. bei 70 °C | % | 64 | 63 | 63 | 66 | 66 | 66 | 65 | 65 | 66 |
| tan δₘₐₓ bei 55 °C | - | 0,126 | 0,135 | 0,132 | 0,113 | 0,114 | 0,107 | 0,111 | 0,109 | 0,110 |
| Haftkraft (ungealtert) | % | 100 | 91 | 97 | 96 | 86 | 91 | 110 | 108 | 94 |
| Bedeckung (ungealtert) | | 4,0 | 4,3 | 4,5 | 4,5 | 4,2 | 4,3 | 4,5 | 4,5 | 4,5 |

| | | | | | | | | | | |
|---|---|---|---|---|---|---|---|---|---|---|
| ^{a)} SSBR 1, lösungspolymerisiertes, einfach funktionalisiertes Styrol-Butadien-Copolymer, Styrol-Gehalt: 20 Gew.-%, Vinyl-Gehalt: 54 Gew.-%, Tg = -34 °C, an einem Ende funktionalisiert mit einer ammoniumgruppen-enthaltenden Organosilylgruppe ^{b)} SSBR 2, lösungspolymerisiertes, zweifach funktionalisiertes Styrol-Butadien-Copolymer, Styrol-Gehalt: 28 Gew.-%, Vinyl-Gehalt: 57 Gew.-%, Tg = -23 °C, an einem Ende funktionalisiert mit einer ammoniumgruppen-enthaltenden Organosilylgruppe, am anderen Ende funktionalisiert mit einer Piperazin-Gruppe (Funktionalisierung gemäß: EP 2 703 416 A1). ^{c)} SSBR 3, lösungspolymerisiertes, einfach funktionalisiertes Styrol-Butadien-Copolymer, Styrol-Gehalt: 16 Gew.-%, Vinyl-Gehalt: 35 Gew.-%, Tg = -59 °C, funktionalisiert mit einer Silansulfidgruppe ^{d)} SSBR 4, lösungspolymerisiertes, zweifach funktionalisiertes Styrol-Butadien-Copolymer, Styrol-Gehalt: 10 Gew.-%, Vinyl-Gehalt: 40 Gew.-%, Tg = -60 °C, an einem Ende funktionalisiert mit einer ammoniumgruppen-enthaltenden Organosilylgruppe, am anderen Ende funktionalisiert mit einer Piperidin-Gruppe (Funktionalisierung gemäß: EP 2 703 416 A1). ^{e)} SSBR 5, lösungspolymerisiertes, zweifach funktionalisiertes Styrol-Butadien-Copolymer, Styrol-Gehalt: 9 Gew.-%, Vinyl-Gehalt: 40 Gew.-%, Tg = -58 °C, an einem Ende funktionalisiert mit einer ammoniumgruppen-enthaltenden Organosilylgruppe, am anderen Ende funktionalisiert mit einer Piperazin-Gruppe (Funktionalisierung gemäß: EP 2 703 416 A1). ^{f)} BR, lösungspolymerisiertes, zweifach funktionalisiertes Polybutadien, cis-Gehalt: 30 Gew.-%, trans-Gehalt: 40 Gew.-%, Vinyl-Gehalt. 31 Gew.-%, Tg = -75 °C, an einem Ende funktionalisiert mit einer ammoniumgruppen-enthaltenden Organosilylgruppe, am anderen Ende funktionalisiert mit einer Piperazin-Gruppe (Funktionalisierung gemäß: EP 2 703 416 A1). ^{g)} butylcarbamat-funktionalisiertes Phenol-Formaldehydharz ^{h)} Hexamethoxymethylmelamin 65 %ig auf Kieselsäure | | | | | | | | | | |

In den Mischungen der Tabelle 2 wurden die Polymere in Art und Menge variiert. Der Füllstoffanteil ist mit 65 phr Ruß in allen Mischungen gleich. Bei den erfindungsgemäßen Gummierungsmischungen der Tabelle 2, die ein Dienelastomer mit Funktionalisierungen an beiden Kettenenden enthalten, ist eine deutliche Reduzierung des Verlustfaktors tan δₘₐₓ bei 55 °C zu verzeichnen. Dies geht einher mit einer Verringerung des Rollwiderstandes bei Verwendung der Mischung in Fahrzeugluftreifen.

Eine weitere Reduzierung des Verlustfaktors tan δₘₐₓ bei 55 °C kann erzielt werden, wenn das Dienelastomer eine Glasübergangstemperatur T_{g} gemäß DSC von weniger als -40 °C besitzt (s. 11(E), 12(E), 13 (E)).

Sowohl Haftkraft als auch Bedeckung als Indikatoren für eine stabile Haftung zwischen Gummierungsmischung und Textilkord werden nur geringfügig beeinträchtigt. Durch die Verwendung von geringeren Mengen an zweifach funktionalisiertem Dienelastomer können diese Werte gegenüber den Referenzmischungen sogar gesteigert werden und trotzdem kann eine deutliche Reduzierung des Verlustfaktors tan δₘₐₓ bei 55 °C erzielt werden (s. 14(E), 15(E)).

**Tabelle 3**

| **Bestandteile** | **Einheit** | **10(V)** | **12(E)** | **17(E)** |
|---|---|---|---|---|
| Naturkautschuk | phr | 50 | 50 | 50 |
| SSBR 3^{a)} | phr | 50 | - | - |
| SSBR 5^{b)} | phr | - | 50 | 50 |
| Ruß N660 | phr | 65 | 65 | 45 |
| Weichmacher, Alterungsschutzmittel | phr | 17 | 17 | 17 |
| Vulkanisationsaktivatoren | phr | 4 | 4 | 4 |
| Silankupplungsagens | phr | - | - | - |
| Methylenakzeptor^{c)} | phr | 1,6 | 1,6 | 1,6 |
| Methylendonor^{d)} | phr | 2 | 2 | 2 |
| Beschleuniger | phr | 1 | 1 | 1 |
| Schwefel | phr | 2,5 | 2,5 | 2,5 |

| **Eigenschaften** | | | | |
|---|---|---|---|---|
| Härte bei RT | ShoreA | 57 | 56 | 48 |
| Rückprallelast. bei 70 °C | % | 63 | 66 | 70 |
| tan δₘₐₓ bei 55 °C | - | 0,132 | 0,114 | 0,076 |
| Haftkraft (ungealtert) | % | 100 | 89 | 114 |
| Bedeckung (ungealtert) | - | 4.5 | 4.2 | 4.5 |

| | | | | |
|---|---|---|---|---|
| ^{a)} SSBR 3, lösungspolymerisiertes, einfach funktionalisiertes Styrol-Butadien-Copolymer, Styrol-Gehalt: 16 Gew.-%, Vinyl-Gehalt: 35 Gew.-%, Tg = -59 °C, funktionalisiert mit einer Silansulfidgruppe ^{b)} SSBR 5, lösungspolymerisiertes, zweifach funktionalisiertes Styrol-Butadien-Copolymer, Styrol-Gehalt: 9 Gew.-%, Vinyl-Gehalt: 40 Gew.-%, Tg = -58 °C, an einem Ende funktionalisiert mit einer ammoniumgruppen-enthaltenden Organosilylgruppe, am anderen Ende funktionalisiert mit einer Piperazin-Gruppe (Funktionalisierung gemäß: EP 2 703 416 A1). ^{c)} butylcarbamat-funktionalisiertes Phenol-Formaldehydharz ^{d)} Hexamethoxymethylmelamin 65 %ig auf Kieselsäure | | | | |

In den Mischungen der Tabelle 3 wurde der Anteil an Ruß variiert. Dabei konnte der Verlustfaktor tan δₘₐₓ bei 55 °C durch eine Reduzierung des Rußanteils (s. 17(E)) vermindert werden. Dies resultiert wiederum in einem reduzierten Rollwiderstandes bei Verwendung der Mischung in Fahrzeugluftreifen.

Haftkraft und Bedeckung als Indikatoren für eine stabile Haftung zwischen Gummierungsmischung und Textilkord werden gegenüber der Referenzmischung sogar gesteigert.

**Tabelle 4**

| **Bestandteile** | **Einheit** | **3(V)** | **18(V)** | **5(E)** | **19(E)** | **8(V)** | **10(E)** | **20(E)** |
|---|---|---|---|---|---|---|---|---|
| Naturkautschuk | phr | 50 | 50 | 50 | 50 | 50 | 50 | 75 |
| SSBR 3^{a)} | phr | 50 | 50 | - | - | 50 | - | - |
| SSBR 5^{b)} | phr | - | - | 50 | 50 | - | 50 | 50 |
| Kieselsäure B^{c)} | phr | - | 50 | - | 50 | - | - | - |
| Kieselsäure A^{d)} | phr | 65 | - | 65 | - | - | - | 32 |
| Ruß N660 | phr | - | - | - | - | 65 | 65 | 32 |
| Weichmacher, Alterungsschutzm. | phr | 17 | 17 | 17 | 17 | 17 | 17 | 17 |
| Vulkanisationsaktivatoren | phr | 4 | 4 | 4 | 4 | 4 | 4 | 4 |
| Silankupplungsagens | | 2,5 | 3,6 | 2,5 | 3,6 | - | - | 1,2 |
| Methylenakzeptor^{e)} | phr | 1,6 | 1,6 | 1,6 | 1,6 | 1,6 | 1,6 | 1,6 |
| Methylendonor^{f)} | phr | 2 | 2 | 2 | 2 | 2 | 2 | 2 |
| Beschleuniger | phr | 1,9 | 1,9 | 1,9 | 1,9 | 1 | 1 | 1,4 |
| Schwefel | phr | 2,5 | 2,5 | 2,5 | 2,5 | 2,5 | 2,5 | 2,5 |

| **Eigenschaften** | | | | | | | | |
|---|---|---|---|---|---|---|---|---|
| Härte bei RT | ShoreA | 55 | 57 | 54 | 51 | 57 | 56 | 55 |
| tan δₘₐₓ bei 55 °C | - | 0,094 | 0,104 | 0,083 | 0,097 | 0,135 | 0,114 | 0,099 |
| Haftkraft (ungealtert) | % | 100 | 90 | 100 | 161 | 124 | 118 | 111 |
| Bedeckung (ungealtert) | - | 3,8 | 4 | 4,5 | 4 | 4,3 | 4,2 | 4,5 |

| | | | | | | | | |
|---|---|---|---|---|---|---|---|---|
| ^{a)} SSBR 3, lösungspolymerisiertes, einfach funktionalisiertes Styrol-Butadien-Copolymer, Styrol-Gehalt: 16 Gew.-%, Vinyl-Gehalt: 35 Gew.-%, Tg = -59 °C, funktionalisiert mit einer Silansulfidgruppe ^{b)} SSBR 5, lösungspolymerisiertes, zweifach funktionalisiertes Styrol-Butadien-Copolymer, Styrol-Gehalt: 9 Gew.-%, Vinyl-Gehalt: 40 Gew.-%, Tg = -58 °C, an einem Ende funktionalisiert mit einer ammoniumgruppen-enthaltenden Organosilylgruppe, am anderen Ende funktionalisert mit einer Piperazin-Gruppe (Funktionalisierung gemäß: EP 2 703 416 A1). ^{c)} HI-SIL EZ 160 G-D, CTAB-Zahl 160 m²/g, BET 160 m²/g, Fa. PPG Silica Products ^{d)} Zeosil^{®} 1085 MP, CTAB-Zahl = 80 m²/g, BET 90 m²/g, Fa. Solvay ^{e)} butylcarbamat-funktionalisiertes Phenol-Formaldehydharz ^{f)} Hexamethoxymethylmelamin 65 %ig auf Kieselsäure | | | | | | | | |

In den Mischungen der Tabelle 4 wurden Kieselsäure- und Rußmischungen verglichen und ein Gemisch aus Kieselsäure und Ruß verwendet. Wie zu sehen ist, weisen reine Kieselsäuremischungen einen besonders stark reduzierten Verlustfaktor tan δₘₐₓ bei 55 °C auf, führen aber zu einer reduzierten Haftkraft. Reine Rußmischungen hingegen zeigen eine verbesserte Haftkraft jedoch einen höheren Verlustfaktor tan δₘₐₓ bei 55 °C. Dieser Zielkonflikt kann durch die Verwendung eines Gemisches aus Kieselsäure und Ruß teilweise überwunden werden. Eine derartige Mischung zeigt eine verbesserte Haftkraft gegenüber einer reinen Kieselsäuremischung und einen verbesserten Verlustfaktor tan δₘₐₓ bei 55 °C gegenüber einer reinen Rußmischung (s. 20(E)).

## Patentansprüche

1. Fahrzeugluftreifen, der eine mit Schwefel vernetzte Gummierungsmischung für textile Festigkeitsträger, enthaltend
- 5 bis 80 phr (Gewichtsteile, bezogen auf 100 Gewichtsteile der gesamten Kautschuke in der Mischung) zumindest eines Polyisoprens,
- 20 bis 95 phr zumindest eines lösungspolymerisierten, funktionalisierten Dienelastomers aus zumindest einem konjugierten Dien und gegebenenfalls einer oder mehrerer vinylaromatischer Verbindungen mit einem Gehalt an vinylaromatischer Verbindung von 0 bis 50 Gew.-%,
- 10 bis 90 phr zumindest eines Füllstoffes und
- ein Haftsystem für die Gummi-Textilhaftung,
**aufweist,**
**dadurch gekennzeichnet, dass** das lösungspolymerisierte, funktionalisierte Dienelastomer an einem Kettenende mit einer aminogruppen- und/oder ammoniumgruppen-enthaltenden Organosilylgruppe funktionalisiert ist und am anderen Kettenende mit einer Aminogruppe funktionalisiert ist.

2. Fahrzeugluftreifen nach Anspruch 1, **dadurch gekennzeichnet, dass** im lösungspolymerisierten, funktionalisierten Dienelastomer die Aminogruppe am anderen Kettenende eine ringförmige Amingruppe und/oder eine ringförmige Diamingruppe ist.

3. Fahrzeugluftreifen nach Anspruch 1oder 2, **dadurch gekennzeichnet, dass** das lösungspolymerisierte, funktionalisierte Dienelastomer eine Glasübergangstemperatur T_{g} gemäß DSC von weniger als -40 °C aufweist.

4. Fahrzeugluftreifen nach zumindest einem der vorhergehenden Ansprüche, **dadurch gekennzeichnet, dass** das lösungspolymerisierte, funktionalisierte Dienelastomer einen Gehalt an vinylaromatischer Verbindung von 0 bis 40 Gew.- % aufweist.

5. Fahrzeugluftreifen nach Anspruch 4, **dadurch gekennzeichnet, dass** das lösungspolymerisierte, funktionalisierte Dienelastomer ein Styrol-Butadien-Copolymer ist.

6. Fahrzeugluftreifen nach Anspruch 4, **dadurch gekennzeichnet, dass** das lösungspolymerisierte, funktionalisierte Dienelastomer ein Polybutadien ist.

7. Fahrzeugluftreifen nach zumindest einem der vorhergehenden Ansprüche, **dadurch gekennzeichnet, dass** sie zwei lösungspolymerisierte, funktionalisierte Dienelastomere enthält, wobei ein Dienelastomer ein Styrol-Butadien-Copolymer und das andere Dienelastomer ein Polybutadien ist, wobei sie Styrol-Butadien-Copolymer und Polybutadien vorzugsweise im Verhältnis von 1:2 bis 2:1 enthält.

8. Fahrzeugluftreifen nach zumindest einem der vorhergehenden Ansprüche, **dadurch gekennzeichnet, dass** sie 10 bis 90 phr zumindest einer Kieselsäure, vorzugsweise einer hochdispergierbaren Kieselsäure, als Füllstoff enthält.

9. Fahrzeugluftreifen nach Anspruch 8, **dadurch gekennzeichnet, dass** die Kieselsäure eine CTAB-Zahl gemäß ASTM D 3765 von weniger 180 m²/g, vorzugsweise weniger als 100 m²/g, aufweist.

10. Fahrzeugluftreifen nach zumindest einem der vorhergehenden Ansprüche, **dadurch gekennzeichnet, dass** sie 10 bis 90 phr zumindest eines Rußes als Füllstoff enthält.

11. Fahrzeugluftreifen nach Anspruch 10, **dadurch gekennzeichnet, dass** der Ruß eine Iodadsorptions-Zahl gemäß ASTM D 1510 von weniger 100 mg/g, vorzugsweise weniger als 50 mg/g, aufweist.

12. Fahrzeugluftreifen nach zumindest einem der vorhergehenden Ansprüche, **dadurch gekennzeichnet, dass** das Haftsystem für die Gummi-Textil-Haftung ein Methylenakzeptor-Methylendonor-Paar ist.

13. Fahrzeugluftreifen nach zumindest einem der vorhergehenden Ansprüche, **dadurch gekennzeichnet, dass** er eine Karkassgummierung aus der Gummierungsmischung aufweist.

14. Fahrzeugluftreifen nach zumindest einem der vorhergehenden Ansprüche, **dadurch gekennzeichnet, dass** er eine Bandagengummierung aus der Gummierungsmischung aufweist.

## Claims

1. Pneumatic vehicle tyre comprising a sulfur-crosslinked rubberization mixture for textile strength members, containing
- 5 to 80 phr (parts by weight, based on 100 parts by weight of all rubbers in the mixture) of at least one polyisoprene,
- 20 to 95 phr of at least one solution-polymerized, functionalized diene elastomer composed of at least one conjugated diene and optionally one or more vinylaromatic compounds, with a content of vinylaromatic compound of 0% to 50% by weight,
- 10 to 90 phr of at least one filler and
- a bonding system for rubber-textile adhesion,
**characterized in that** the solution-polymerized, functionalized diene elastomer is functionalized at one end of the chain with an organosilyl group containing amino groups and/or ammonium groups and is functionalized at the other end of the chain with an amino group.

2. Pneumatic vehicle tyre according to Claim 1, **characterized in that**, in the solution-polymerized, functionalized diene elastomer, the amino group at the other end of the chain is a cyclic amine group and/or a cyclic diamine group.

3. Pneumatic vehicle tyre according to Claim 1 or 2, **characterized in that** the solution-polymerized, functionalized diene elastomer has a glass transition temperature T_{g} according to DSC of less than -40°C.

4. Pneumatic vehicle tyre according to at least one of the preceding claims, **characterized in that** the solution-polymerized, functionalized diene elastomer has a content of vinylaromatic compound of 0% to 40% by weight.

5. Pneumatic vehicle tyre according to Claim 4, **characterized in that** the solution-polymerized, functionalized diene elastomer is a styrene-butadiene copolymer.

6. Pneumatic vehicle tyre according to Claim 4, **characterized in that** the solution-polymerized, functionalized diene elastomer is a polybutadiene.

7. Pneumatic vehicle tyre according to at least one of the preceding claims, **characterized in that** it contains two solution-polymerized, functionalized diene elastomers, wherein one diene elastomer is a styrene-butadiene copolymer and the other diene elastomer is a polybutadiene, wherein it contains styrene-butadiene copolymer and polybutadiene preferably in a ratio of 1:2 to 2:1.

8. Pneumatic vehicle tyre according to at least one of the preceding claims, **characterized in that** it contains 10 to 90 phr of at least one silica, preferably a highly dispersible silica, as filler.

9. Pneumatic vehicle tyre according to Claim 8, **characterized in that** the silica has a CTAB number according to ASTM D 3765 of less than 180 m²/g, preferably less than 100 m²/g.

10. Pneumatic vehicle tyre according to at least one of the preceding claims, **characterized in that** it contains 10 to 90 phr of at least one carbon black, as filler.

11. Pneumatic vehicle tyre according to Claim 10, **characterized in that** the carbon black has an iodine adsorption number according to ASTM D 1510 of less than 100 mg/g, preferably less than 50 mg/g.

12. Pneumatic vehicle tyre according to at least one of the preceding claims, **characterized in that** the bonding system for rubber-textile adhesion is a methylene acceptor-methylene donor pair.

13. Pneumatic vehicle tyre according to at least one of the preceding claims, **characterized in that** it comprises a carcass rubberization composed of the rubberization mixture.

14. Pneumatic vehicle tyre according to at least one of the preceding claims, **characterized in that** it comprises a bandage rubberization composed of the rubberization mixture.

## Revendications

1. Pneumatique pour véhicule, présentant un mélange de gommage réticulé au soufre pour des renforts textiles, contenant :
- 5 à 80 pcc (parties en poids, rapportées à 100 parties en poids de la totalité des caoutchoucs dans le mélange) d'au moins un polyisoprène,
- 20 à 95 pcc d'au moins un élastomère diénique, polymérisé en solution, fonctionnalisé, d'au moins un diène conjugué et, le cas échéant, d'un ou de plusieurs composés aromatiques de vinyle, présentant une teneur en composé aromatique de vinyle de 0 à 50% en poids,
- 10 à 90 pcc d'au moins une charge,
- un système adhésif pour l'adhérence caoutchouc-textile,
**caractérisé en ce que** l'élastomère diénique, polymérisé en solution, fonctionnalisé, est fonctionnalisé en une extrémité de chaîne par un groupe organosilyle contenant des groupes amino et/ou des groupes ammonium et, en l'autre extrémité de chaîne, par un groupe amino.

2. Pneumatique pour véhicule selon la revendication 1, **caractérisé en ce que**, dans l'élastomère diénique, polymérisé en solution, fonctionnalisé, le groupe amino en l'autre extrémité de chaîne est un groupe amine annulaire et/ou un groupe diamine annulaire.

3. Pneumatique pour véhicule selon la revendication 1 ou 2, **caractérisé en ce que** l'élastomère diénique, polymérisé en solution, fonctionnalisé, présente une température de transition vitreuse T_{g} selon la DSC (calorimétrie différentielle à balayage) inférieure à -40°C.

4. Pneumatique pour véhicule selon au moins l'une des revendications précédentes, **caractérisé en ce que** l'élastomère diénique, polymérisé en solution, fonctionnalisé, présente une teneur en composé aromatique de vinyle de 0 à 40% en poids.

5. Pneumatique pour véhicule selon la revendication 4, **caractérisé en ce que** l'élastomère diénique, polymérisé en solution, fonctionnalisé, est un copolymère de styrène-butadiène.

6. Pneumatique pour véhicule selon la revendication 4, **caractérisé en ce que** l'élastomère diénique, polymérisé en solution, fonctionnalisé, est un polybutadiène.

7. Pneumatique pour véhicule selon au moins l'une des revendications précédentes, **caractérisé en ce qu'**il contient deux élastomères diéniques, polymérisés en solution, fonctionnalisés, un élastomère diénique étant un copolymère de styrène-butadiène et l'autre élastomère diénique étant un polybutadiène, le pneumatique contenant le copolymère de styrène-butadiène et le polybutadiène de préférence dans un rapport de 1:2 à 2:1.

8. Pneumatique pour véhicule selon au moins l'une des revendications précédentes, **caractérisé en ce qu'**il contient, comme charge, 10 à 90 pcc d'au moins une silice, de préférence une silice hautement dispersible.

9. Pneumatique pour véhicule selon la revendication 8, **caractérisé en ce que** la silice présente un indice CTAB selon la norme ASTM D 3765 inférieur à 180 m²/g, de préférence inférieur à 100 m²/g.

10. Pneumatique pour véhicule selon au moins l'une des revendications précédentes, **caractérisé en ce qu'**il contient, comme charge, 10 à 90 pcc d'au moins une suie.

11. Pneumatique pour véhicule selon la revendication 10, **caractérisé en ce que** la suie présente un indice d'adsorption d'iode selon la norme ASTM D 1510 inférieur à 100 mg/g, de préférence inférieur à 50 mg/g.

12. Pneumatique pour véhicule selon au moins l'une des revendications précédentes, **caractérisé en ce que** le système adhésif pour l'adhérence caoutchouc-textile est une paire accepteur de méthylène/donneur de méthylène.

13. Pneumatique pour véhicule selon au moins l'une des revendications précédentes, **caractérisé en ce qu'**il présente un gommage de carcasse constitué du mélange de gommage.

14. Pneumatique pour véhicule selon au moins l'une des revendications précédentes, **caractérisé en ce qu'**il présente un gommage de bande de roulement constitué du mélange de gommage.
